# EUROPEAN PATENT APPLICATION

(11) **EP 4 818 988 A1**
(43) Date of publication of application: **07.10.2026**
(21) Application number: 25168455.1
(22) Date of filing: 04.04.2025
(51) Int. Cl.: G06N 10/20, G06N 10/60, G06N 5/01

(54) **METHOD AND SYSTEM FOR SOLVING ROBUST OPTIMIZATION PROBLEMS**

(71) Applicant: Fraunhofer-Gesellschaft zur Förderung der angewandten Forschung, 80686 Munich (DE); Honda Research Institute Europe GmbH, 63073 Offenbach/Main (DE)
(72) Inventor: Halffmann, Dr. Pascal Willi, 80686 Munich (DE); Schmitt, Dr. Sebastian, 63073 Offenbach am Main (DE)
(74) Representative: Roth, Sebastian

(57) **Abstract**

A computer implemented method for obtaining a set 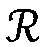 of one or more robust solutions *xᵣ* to a classical robust optimization problem is provided. The one or more robust solutions provide optimal values of one or more cost functions *C*(*x, **α***), each cost function being a function of one or more variables *x* and of one or more scenario variables ***α*** ∈ 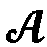 *,* 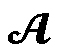 representing all possible scenarios, each scenario being characterized by a respective set of scenario variables ***α***, and where each robust solution is specified by a set of parameters **γ** and by the scenario variables ***α***. The hybrid quantum-classical computer system comprises a classical computation component and a quantum information processing (QIP) component that are used together to solve the robust optimization problem. While performing the method, the QIP component executes a parameterized quantum circuit with the set of parameters and using the set of scenario variables.

## Description

### TECHNICAL FIELD

The invention relates to a computer implemented method for obtaining a set of one or more robust solutions to a classical robust optimization problem, and a hybrid quantum-classical computer system implementing such method.

### BACKGROUND

In practice, the ability to make reliable decisions under uncertainty is crucial to the success of many companies and organizations. For example, route planners have to make decisions that lead to optimal results despite inaccurate congestion and traffic forecasts or fluctuating fuel prices. Furthermore, certain properties of these real-world problems cannot be quantified or can only be quantified approximately. Therefore, these kind of problems from the real world cannot be accurately mapped in computer-aided simulations or modelling. In the translation of realistic problems, assumptions must therefore always be made or different scenarios for the uncertain properties that can occur in real life, e.g. different forecasts, must be mapped in order to characterize this problem as well as possible. Uncertainties can take many forms, including stochastic fluctuations, scenario-based uncertainties, or unclear estimates.

Robust optimization is a branch of optimization that focuses on developing models and solutions that are resilient to real-life uncertainties and disruptions. This sub-area of optimization aims to find solutions that perform satisfactorily not only under the ideal, predicted conditions, but also under all, but especially under the worst, expected scenarios. However, this goal cannot be clearly described and quantified. What constitutes satisfactory performance depends on the personal goals of a user, so that different concepts for measuring performance, i.e., so-called robustness concepts, are available in robust optimization. This is in contrast to non-robust or deterministic optimization, in which an optimal solution is found for a concrete design of the model parameters.

Solving a robust optimization problem as a model of a real-world problem leads to a disproportionately higher effort in the calculation and simulation of optimal solutions. Uncertainties can have complex dependencies and correlations between different model parameters. Modelling and accounting for such dependencies greatly increases the complexity of the optimization problem. Robustness requirements often increase the computational effort of optimization problems. The resulting robust optimization problems are often much more complex and require more computational resources than their deterministic counterparts. In the worst case, a solution candidate must be evaluated in relation to each scenario. For large, complex systems, robust optimization can be particularly challenging. Further, the size and complexity of the problem can significantly increase the computational time and resource requirements.

Moreover, users are often not only interested in an optimal solution, but in a selection or even all optimal solutions. As the optimization problem is only a modeling of the real-world problem, it cannot take into account certain qualitative or non-quantifiable criteria of the user. Therefore, solving the robust optimization problem does not act as a decision-maker, but as a decision support system for the user. In a next step, the customer or user can use new criteria to select the preferred solution or one that can be implemented in the real world. As mentioned above, calculating a robust solution is time-consuming, and the calculation of a selection or even all robust solutions often scales with the number of solutions, which significantly increases calculation time and resource requirements.

Robust optimization is a very broad field of research in mathematical optimization and includes a variety of alternatives to solve optimization problems with uncertain parameters. A problem with uncertain parameters from the real world can have different properties, be modeled differently, and there are a variety of algorithms for the most common combinations of problem properties and modeling. The most important combinations result from the type of uncertainty (discrete or continuous, e.g. an interval, scenario set or range of values of the uncertain parameter, probabilities, the number and nature of the uncertain parameters, for example in the objective function or in a constraint) and in modeling; in the latter case, the robustness concept is crucial, for example worst case robustness, in which the worst performance of the solution, considered across all scenarios, is minimized.

In principle, the abstract structure of all existing methods for solving said robust optimization problems is similar. Every robust optimization problem has a deterministic counterpart, a model where all parameters are given and fixed.

In conventional solutions, the robust problem is solved with an algorithm that uses typical methods from deterministic optimization, such as branch-and-bound, 2-stage methods, decomposition methods that divide the problem into several sub problems, duality and relaxation. Sub problems, which may include the deterministic problem, are then solved using methods for deterministic optimization problems, and their solution is further used and reinterpreted. To carry out these methods, classical, i.e. non-quantum, hardware components and computers are used, thereby encompassing the above-mentioned limitations in computing resources as e.g. power and cost.

Quantum optimization is becoming a very active field of research. Conventional hybrid quantum-classical approaches employ a unitary circuit, potentially subject to environmental noise or dissipation, which uses a phase Hamiltonian (also called cost Hamiltonian) which depends on, or is expressed as, a function of the objective function of the original classical optimization problem.

Although a conventional hybrid quantum-classical approach has been proposed to tackle a robust optimization problem using an online sub gradient method, there is still a need to address robust optimization problems in an efficient manner using both classical and quantum hardware devices.

### SUMMARY

The present disclosure addresses the above mentioned problem to find robust solutions of realistic real world problems, for example in the energy management domain, on current and future quantum hardware devices employing a quantum-classical approach according to the method and computer system defined in the independent claims.

The dependent claims define advantageous aspects and features.

This disclosure encompasses the utilization of the quantum superposition, which is inherent to quantum states, as a resource to encode one or more robust solutions of a classical robust optimization problem. The one or more robust solutions are found and provide optimized values (optimal or close to optimal values) of each cost function corresponding to one of a plurality of problem scenarios, *C*(***x**, **α***) that is a function of one or more variables ***x***, and is also a function of the respective scenario. Further, the quantum circuit that implements such a quantum superposition is tailored in a way that a unitary operator is able to efficiently handle all the scenarios, thereby providing with all the robust solutions in a single, final quantum state.

A computing implemented method for a hybrid quantum-classical computer system for obtaining a set 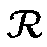 of one or more robust solutions *xᵣ* to a classical robust optimization problem, the one or more robust solutions providing optimal values of one or more cost functions *C(**x**, **α***), each of which is a function of one or more variables ***x*** and of one or more scenario variables ***α*** ∈ 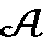 , 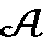 representing all possible scenarios, each scenario being characterized by a respective set of scenario variables ***α*** = (*α*₁, *α*₂,..., *αₖ*, *..., a_{N_{α}}*), where *N_{α}* is a number of parameters associated with the respective scenario, and *k =* 1, *..., N_{α},* where each robust solution *xᵣ* is specified by a set of parameters ***γ*** and by the scenario variables ***α***, is provided. The hybrid quantum-classical computer system comprises a classical computation component and a quantum information processing (QIP) component. The QIP component may be or may comprise, for example, a QIP device (QIPD). The classical computation component and the QIP component (or QIPD) may be checkedrealized as two separate entities being capable of exchanging information. Alternatively, they may be integrated into one device, this does not limit this disclosure. The method comprises the following steps:
(a) generating, in the classical computation component, a set of scenario variables, the set comprising the one or more scenario variables ${\left\{{α}_{a}\right\}}_{a = 1}^{A}$ for the possible scenarios 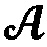 , wherein *A* is a total number of scenarios and *a* = 1, ..., *A*, and sending the set of scenario variables ${\left\{{α}_{a}\right\}}_{a = 1}^{A}$ to the QIP component;
(b) generating, in the classical computation component, the set of parameters ***γ*** and sending it to the QIP component;
(c) generating, in the QIP component, a quantum state |*ψ*〉 = *U*(***γ**,* 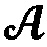 )|*ψ*₀〉 of a plurality of *N* qubits or *N* qudits by executing a parameterized quantum circuit, PQC, with the set of parameters ***γ*,** wherein the quantum state |*ψ*〉 comprises a linear superposition of quantum states, the linear superposition of quantum states representing a superposition of the one or more robust solutions *xᵣ*, *U*(***γ**,* 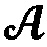 ) is a unitary quantum operator that is a function of the set of scenario variables ${\left\{{α}_{a}\right\}}_{a = 1}^{A}$ for all possible scenarios of the robust optimization problem and of the set of parameters ***γ***, and |*ψ*₀〉 is a N-qubit or N-qudit initial state;
(d) extracting, in the QIP component, each of the one or more robust solutions *xᵣ* from the quantum state |*ψ*〉 by using a basis-state selection method, and sending the one or more robust classical solutions *xᵣ* to the classical computation component;
and the method further comprises:
generating, in the classical computation component, the set 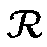 comprising the one or more robust classical solutions *xᵣ*, and providing the set 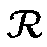 as a result.

Hereinafter, the terms "QIP component" and "QIP device" may be used interchangeably. Further, the terms "robust solutions" and "robust classical solutions" may be used interchangeably.

In an embodiment, the method further comprises: processing, in the classical computation component, the set 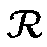 of robust solutions ***x**ᵣ* to group the robust solutions *xᵣ* into one or more classes by using classical post-processing; and providing, by the classical computation component, the one or more classes as a further result. Each class may comprise groups of solutions *xᵣ* having similar properties in some of their features. For example, the one or more classes can be based on a value of a respective robustness criterion.

For example and lot as a limitation, a first class or group may comprise one or more solutions ***xᵣ*** with a first predetermined value of the respective robustness criterion, , a second class or group may comprise one or more solutions ***xᵣ*** with a second predetermined value of the respective robustness criterion, and a third class or group may comprise one or more solutions ***xᵣ*** with a third predetermined value of the respective robustness criterion , wherein the first predetermined value is higher than the second predetermined value and than the third predetermined value, and the second predetermined value is larger than the third value.

In another example, the one or more classes may be determined based on a performance value corresponding to one or more solutions ***xᵣ*,** or may be determined based on one or more combinations of values of the respective robustness criterion and values of the respective performance.

In a further example, as each robust solution ***xᵣ*** is a vector, the one or more classes may be defined based on a property of the one or more solutions vectors ***xᵣ*,** e.g., the one or more classes may be defined based on similarity of the vectors ***xᵣ*.**

Alternatively, in an embodiment, the method further comprises: processing, in the QIP component, the robust solutions ***xᵣ*** to group the robust solutions *xᵣ* into one or more classes by using a quantum machine learning algorithm, and providing the one or more classes to the classical computation component; and providing, by the classical computation component, the one or more classes as a further result.

In an embodiment, the unitary quantum operator *U(γ,* 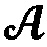 ) implemented by the PQC is composed at least by a plurality of parametrizable quantum gates with the set of parameters ***γ***, and by one or more cost function Hamiltonians *Ĥ*(***αₐ***), each cost function Hamiltonian implementing a respective one of the scenario variables ${\left\{{α}_{a}\right\}}_{a = 1}^{A}$.

In an embodiment, the plurality of parametrizable quantum gates comprise one or more single-qubit rotations and one or more two-qubit rotations. Alternatively, the plurality of parametrizable quantum gates comprise one or more single-qudit rotations and one or more two-qudit rotations.

According to an embodiment, the unitary operator *U*(***γ**,* 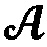 ) takes the form:
*U*(***γ,*** 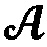 ) = *U_{M}*(*γ*_{1;*A*}) exp (*-iγ*_{2;}*_{A}Ĥ*(***α**_{A}*))··· *U_{M}*(*γ*_{1;2}) exp(*-iγ*_{2;2}*Ĥ*(*α*₂)) *U_{M}*(*γ*_{1;1}) exp(*-iγ*_{2;1}*Ĥ*(*α*₁)), where the set of parameters $γ = {\left\{{γ}_{1 ; a}, {y}_{2 ; a}\right\}}_{a = 1}^{A}$ comprises 2A free parameters, where *γ*_{1;*a*} is a parameter controlling a mixing unitary associated with each scenario *a*, *γ*_{2;*a*} is a parameter controlling the cost Hamiltonian characterizing each scenario *a*, where each ***α**ₐ* of the set of scenario variables ${\left\{{α}_{a}\right\}}_{a = 1}^{A}$ is one scenario out of the *A* scenarios considered in the classical robust optimization problem, and *U_{M}*(*γ*_{1;*a*}) = *exp*(*-i γ*_{1;a}*Ĥ_{M}*) is the mixing unitary associated with each scenario *a*, the mixing unitary being determined by a Hermitian mixing operator *Ĥ_{M},* the Hermitian mixing operator *Ĥ_{M}* being chosen to not commute with the cost Hamiltonians, [*Ĥ_{M} , Ĥ*(*αₐ*)] ≠ 0, and wherein the mixing operator *Ĥ_{M}* is a function of an x-angular momentum operator and a y-angular momentum operator, *Ĥ_{M}* ≡ *Ĥ_{M}*(*L̂ₓ, L̂_{y}*).

According to another embodiment, the state |*ψ*〉 comprising the one or more robust solutions as superposition is expressed as: $\left|\left.ψ\right〉\right. = {\sum }_{x} \sqrt{{p}_{U} \left(x\right)} \left|\left.x\right〉\right.$ , where *p_{U}*(***x***) is a probability distribution, the probability distribution having a value ≫ 0 for a respective solution that minimizes the cost function for all the possible scenarios 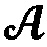 and that has a respective robustness criterion being below a threshold value *F*₀.

According to an embodiment, the probability distribution is, or comprises: ${p}_{U}^{constant} \left(x\right) =$ $\frac{1}{R} Θ \left({F}_{0}-F\left[x, C, A\right]\right)$ with *R* = | 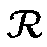 | and 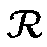 = {*x* : 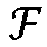 [***x**, C,* 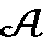 ] ≤ *F*₀}, or ${p}_{U}^{linear} \left(x\right) = \frac{1}{Z} \left[{F}_{0}\right. -$ 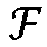 [***x**, C,* 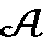 ]], with *Z =* ∑*ₓ*[*F₀ -* 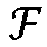 [***x**, C,* 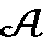 ]], ; or ${p}_{U}^{Boltzmann} \left(x\right) = \frac{{e}^{- F \left[x, C, A\right] / {F}_{0}}}{Z}$ with *Z* = 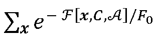 , where Θ(*j*) is the Heavyside step function, the notation [*j*]₊ = max(*j*, 0) gives the argument *j* for positive arguments and zero otherwise, 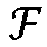 [***x**, C,* 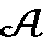 ] is the robustness criterion, and *F*₀ is the threshold value for the robustness criterion.

Further, in an embodiment, the PQC further comprises one or more ancilla states, each ancilla state corresponding to one *αₐ* of the set of scenario variables ${\left\{{α}_{a}\right\}}_{a = 1}^{A}$.

In an embodiment, the unitary quantum operation implemented by the PQC is *U(**γ**,* 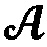 *,* 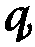 ) and is further composed of a set of operators acting on the one or more ancilla states, wherein 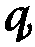 refers to the ancilla states. Additionally, the quantum state |*ψ*〉 comprises a tensor product of the quantum states representing the one or more robust solutions *xᵣ* and the one or more ancilla states, and |*ψ*₀〉 is a tensor product of the *N*-qubit or *N*-qudit initial states and one or more initial ancilla states.

According to another embodiment, before generating, on the classical computation component, the set 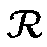 comprising the one or more robust solutions *xᵣ*, and providing the set 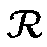 as the result, the method further comprises: analyzing, in the classical computation component, the one or more robust solutions *xᵣ* using a classical optimization protocol or a heuristic method; and performing an iterative procedure until a predefined criterion is reached. In each iteration *i*, the method comprises: performing the method step (b) above using an updated set of parameters ***γ*** based on a result of the analysis; performing the method steps (c) to (d) above to obtain one or more updated robust solutions *xᵣ*; analyzing, in the classical computation component, the one or more updated robust solutions *xᵣ* using the classical optimization protocol or the heuristic method; and generating, in the classical computation component, a new updated the set of parameters ***γ*** based on the result of the analysis.

The method may further be applied to obtain, by a service operator, an optimal charging and driving schedule of a fleet consisting of *N_{EV}* electric vehicles (EVs), where the target is to find a set of solutions x = {*x_{n,t}, x_{n,p}*}, wherein *x_{n,t}* specifies a charging level of each EV at a time interval *t,* and *x_{n,p}* specifies an assignment of a trip request *p* from each of one or more customers to one of the EVs.

According to this implementation, one of the scenario variables is denoted ***α**_{EV},* and comprises, or takes the form: ***α**_{EV}* = (*PV_{predict}*(*t*), *c_{predict}*(*t*), *s_{predict}*(*t*), *tₚ,* Δ*tₚ ,* Δ*Eₚ, E*_{*n,*0}) ≡ (*α*₁, *α*₂, *..., α*₇) *,* where a number of variables specifying one scenario is given by *N_{α}* = 7, and where: *PV_{predict}*(*t*) is a predicted PV power available during the scheduling period; each trip *p* requested by each customer has a desired start time interval *tₚ,* an expected duration Δ*t*ₚ and an expected energy consumption Δ*Eₚ* of a respective EV serving the request; the service operator plans the schedule with predicted costs *c_{predict}*(*t*) and *s_{predict}*(*t*) for getting energy and for providing electricity respectively; *E*_{*n*,0} is an initial state of charge of the battery of each EV. Aa set of all possible values for ***α**_{EV}* determine all the scenarios denoted by 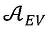 *,* for which optimal solutions, i.e., the robust solutions *xᵣ*, are to be found.

Further, a hybrid quantum-classical computer system is provided, comprising: a QIP component and a classical computation component. The QIP component is configured to realize or implement a PQC by implementing a unitary quantum operation *U(**γ**,* 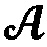 ) that acts on a plurality of *N* qubits or *N* qudits and that is parametrized by a set of parameters *y* and of a set of scenario variables for all possible scenarios 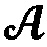 of the robust optimization problem, and that generates a *N-*qubit or *N*-qudit quantum state |*ψ*〉 by applying the unitary quantum operator to a *N*-qubit or qudit initial state |*ψ*₀〉, i.e. |*ψ*〉 = *U*(***γ**,* 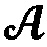 ) |*ψ*₀〉, which can be decomposed into a measurement basis of the QIP component, and each measurement basis state |***x***〉 encodes one robust solution *xᵣ* of the robust optimization problem. The classical computation component is configured to generate the set of parameter ***γ*** and the one or more scenario variables ***α***, and provide them to the QIP component, initiate the execution of the PQC and the preparation of the state |*ψ*〉 in the QIP component, receive each of the one or more robust solutions *xᵣ* that are encoded in the state |*ψ*〉 from the QIP component, generate the set of robust solutions 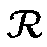 and provide it as a result. In essence, both classical and quantum computation components together are used to solve the classical robust optimization problem.

### BRIEF DESCRIPTION OF DRAWINGS

The present disclosure will now be further described with reference to the attached drawings, in which
- Fig. 1: shows a schematic of a hybrid quantum-classical computer system according to this disclosure.
- Fig. 2: shows a schematic of a hybrid quantum-classical computer system according to this disclosure.
- Fig. 3: shows a schematic of a flowchart for a method performed by a hybrid quantum-classical computer system according to this disclosure.

Same elements shown in the figures are labeled with the same reference sign, and may be implemented likewise. The size of elements in the figures is not to scale and may be different compared to a real life implementation in order to highlight details of the disclosure.

### DETAILED DESCRIPTION OF EMBODIMENTS

The proposed computer implemented method and hybrid quantum-classical computer system aim to provide many to all robust solutions to a classical robust optimization problem, which are those solutions that demonstrate good quality in many different application scenarios. This is due to the fact that the QIP component of the proposed hybrid quantum-classical computer system utilizes quantum superposition, quantum parallelism, and the stochastic nature of quantum systems to generate the plurality of robust solutions in an efficient manner, by encoding said robust solutions in a single quantum state. This is an important or even most important advantage over classical optimization methods, for which the calculation of different robust solutions is associated with significant effort, while the execution of the unitary operations on the QIPD requires hardly any resources.

According to this description, the expression "classical" always refers to known computation as performed in the past using digital computer systems only. Further, the terms unitary operation and unitary may be used interchangeably. Moreover, in this description, a unitary operation is achieved by a respective unitary operator.

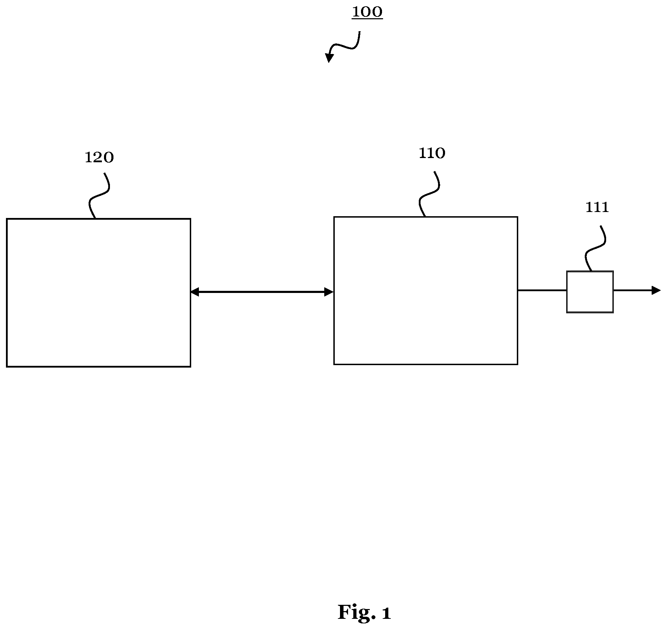

Fig. 1 shows a schematic view of an exemplary embodiment of a hybrid quantum-classical computer system 100 according to this disclosure.

The hybrid quantum-classical computer system 100 comprises a classical computation component 110 and a QIP component or QIPD 120. The classical computation component 110 may be a classical computer, and the QIP component 120 (or QIPD) may be a universal or special-purpose purpose quantum computing device or may be quantum simulator. The quantum computation component 120 and the classical computation component 110 may be realized as two separate entities being capable of exchanging information. Alternatively, they may be integrated into one device.

Both components 110, 120 are configured to transfer and receive information from the respective other component, such that a shared computation can be achieved in order to solve a classical robust optimization problem.

First, the general outline of the problem is provided. Given an application problem in which a set of design parameters, represented by a N-dimensional vector *x =* (*x*₁, ..., *xᵢ,* ..., *x_{N}*), are to be determined that minimize a given cost function. The cost function depends not only on the design parameters, but also on scenario variables ***α*** ∈ 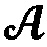 *,* where the set 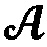 represents all possible scenarios.

One individual scenario is characterized by one set of scenario variables ***α*** = (*α*₁, *α*₂,..., *αₖ*, *..., α_{N_{α}}*), where *N_{α}* is a number of individual parameters associated with the one scenario, and *k =* 1, *..., N_{α}* enumerates its components. The entirety of all considered scenarios is denoted as 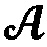 *.*

All the possible scenarios characterized by 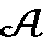 may comprise, for example, an explicit set or list of scenario variables $A = {\left\{{α}_{a}\right\}}_{a = 1}^{A}$, with *A =* | 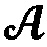 |, or may comprise a probability distribution 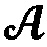 *=* { *P*(***α***)} where individual scenario variables may be defined as ***α** ~ P*(***α***)*,* or may comprise a combination of both examples, or may comprise any other means to define the several, different scenarios.

For a given scenario ***α***, the problem to solved is given in Equation (1): ${min}_{x} C \left(x, α\right) .$ (1)

In the robust optimization problem, what is needed is not only a solution that minimizes the cost function *C* for a given scenario ***α***, but a solution that provided a low value (preferably optimal value) of the cost function for many or all possible and probable scenarios 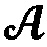 *.*

A way to qualify the robustness of the solutions is done via a robustness criterion 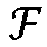 , which must be specified. The robustness criterion can be described as a functional that evaluates the costs of the one or more possible scenarios for a given solution, and returns an indicator of robustness and costs.

For example, the robustness criterion may be expressed as 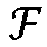 [***x**, C,* 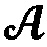 ] and may quantify a value of the cost function of a solution ***x*** averaged over all the one or more scenarios in 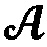 *,* i.e., 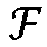 [***x**, C,* 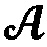 ] *=* ∑*_{α}C(**x**, **α***) / 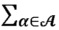 1. In another example, the robustness criterion may return a worst-case cost function of a solutions x over all scenarios, i.e. 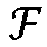 [***x**, C,* 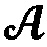 ] *= max_{α} C(**x**, **α***). Other examples for the robustness criterion exist, and the exact form of the robustness criterion 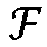 does not limit the present disclosure.

The robust optimization problem is to find solutions that minimizes the robustness criterion, as generally expressed in Equation (2): ${min}_{x} F \left[x, C, A\right] .$ (2)

For each of the one or more specific scenarios ***α***, i.e. for one set of scenario variables, an optimal solution is a solution that minimizes the cost function in Equation (1) above, and is expressed by Equation (3): ${x}_{opt}^{α} = {argmin}_{x} C \left(x, α\right) .$ (3)

The solution in Equation (3) is minimum for one scenario ***α***, but has the drawback that it may have a very large cost for a slightly different scenario

Therefore, this is not a robust solution.

A robust solution is, or comprises, a solution that produces good results in all of the one or more scenarios, and may be assessed by the robustness criterion, as expressed in Equation (4): ${x}_{r} = \left\{x:F\left[x, C, A\right]\leq {F}_{0}\right\} ,$ (4) where good results refer to solutions being equal to, or at least very close to, the optimal solution.

A robust solution may be slightly worse than an optimal non-robust solutions for the one specific scenario ***α***, as indicated in Equation (5): $C \left({x}_{r}, α\right) \geq C \left({x}_{opt}^{α}, α\right) ,$ (5) and it will be robust to changing the scenarios, see Equation (6): $C \left({x}_{r},α′\right) \approx C \left({x}_{r}, α\right) ∀ α , α ′ ∈ A .$ (6)

The exact mathematical statements regarding how much worse the robust solution is compared to the optimal non-robust solutions, and what exactly is meant by stating that the cost function of all robust solutions should be approximately equal to each other, depend on the exact mathematical form of the robustness criterion 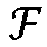 .

From a practical point of view, the decision makers trying to solve the original robust optimization problem may have concise expectations on how the cost function of the robust solutions is allowed to vary, and can tune the robustness criterion to their need. Thus, as aforementioned, the specific form of the criterion 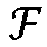 does not limit this disclosure.

Solutions found as explained above have minimal costs with the greatest possible robustness over the possible scenarios 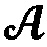 . From this robustness criterion, a set of robust solutions 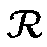 can be obtained by finding those solutions, which have a robustness criterion below a given threshold *F*₀, and may be expressed by Equation (7): $R = \left\{{x}_{r}:F\left[{x}_{r}, C, A\right]\leq {F}_{0}\right\} .$ (7)

The set of robust solutions contains all solutions with minimal cost which have robustness above the threshold value *F*₀.

The QIPD or QIP component 120, is configured to generate a quantum mechanical state that contains the full set of one or more robust solutions in the form of one quantum state as superposition.

The QIPD 120 may be configured in such a way that the N-dimensional vector of design parameters x is represented by *N* elementary quantum degrees of freedom of the QIPD 120, i.e. each vector of the design parameters corresponds to a base state in the computational basis, as shown in Equation (8): $x = \left({x}_{1},…,{x}_{i},…,{x}_{N}\right) ⇔ \left|\left.x\right〉\right. = \left|\left.{x}_{1},…,{x}_{i},…,{x}_{N}\right〉\right. .$ (8)

In general the problem variables are finite range integers with d levels and are represented by problem qudits, d > 2 (i.e., multi-level quantum systems) in the QIPD 120, where *xᵢ* ∈ {0,1,.., *d* - 1}. For binary problems with *d* = 2 these reduce to qubits (i.e., two-level quantum systems).

In the QIPD 120, the cost function of the optimization problem may be represented by a corresponding Hamiltonian operator, or cost Hamiltonian, given in Equation (9): $C \left(x, α\right) ⇔ \hat{H} \left(α\right) ,$ (9) which has the problem base states |*x*〉, see Equation (3), as eigenstates with corresponding eigenvalues, and each eigenvalue corresponds exactly to a value of the cost function for the respective state |***x***〉, see Equation (10): $\hat{H} \left(α\right) \left|\left.x\right〉\right. = C \left(x, α\right) \left|\left.x\right〉\right. .$ (10)

The QIPD 120 then, may be configured to operate on the quantum mechanical states (basis states) |***x***〉 with a quantum circuit, in which information about the cost function *C*(***x**, **α***) may enter via the cost Hamiltonian *Ĥ*(***α***) for each scenario ***α**.*

Then, the QIPD 120 may be configured to prepare an initial state |*ψ*₀〉 being, for example, a superposition of the problem basis states in Equation (8).

The QIPD 120 may be further configured to implement a unitary operator *U(**γ**,* 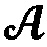 ), also called quantum circuit, which when applied to the predefined initial state may produce the desired output quantum state which encodes the set of robust solutions.

That is, the QIPD 120 utilizes quantum superpositions, quantum parallelism, and the stochastic nature of quantum systems to generate the final robust solutions in an efficient manner.

To that end, the classical computation component 110 and the QIP component 120 of the hybrid quantum-classical computer system 100 according to this disclosure are used together to solved the classical robust optimization problem stated above as follows: In this exemplary embodiment, the classical computation device 110 is configured to generate, in a first step, a set of one or more scenario variables ${\left\{{α}_{a}\right\}}_{a = 1}^{A}$ for all the possible scenarios 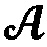 of the robust optimization problem, and send the set of scenario variables ${\left\{{α}_{a}\right\}}_{a = 1}^{A}$ to the QIP component 120.

The classical computation component 110 may be further configured to extract from the cost function *C(**x**, **α***), information specifying each of one or more cost Hamiltonians *Ĥ*(***α**ₐ*), each cost Hamiltonian *Ĥ*(***α**ₐ*) corresponding to each of the set of one or more scenario variables ${\left\{{α}_{a}\right\}}_{a = 1}^{A}$, and send the extracted information to the QIP component 120.

The classical computation component 110 is further configured to generate the set of parameters ***γ***, and send said set of parameters ***γ*** to the QIP component 120.

For example, the classical computation component 110 may generate the set of parameters ***γ*** based on classical information corresponding to the one or more scenario variables ${\left\{{α}_{a}\right\}}_{a = 1}^{A}$ and/or based on the one or more cost Hamiltonians.

Then, the QIP component 120 may configure a quantum operation *U(**γ**,* 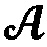 ) that may incorporate all the possible scenarios and the set of parameters ***γ***.

Further, the QIP component 120 may prepare the N-qubit or N-qudit initial state as being, for example, an equal superposition of all possible states encompassing the problem quantum state, given in Equation (11): $\left|\left.{ψ}_{0}\right〉\right. = \frac{1}{\sqrt{{D}_{P}}} {\sum }_{x} \left|\left.x\right〉\right. ,$ (11) where *D_{P}* = *d^{N}* is a dimension of the problem Hilbert space, with d states per qubit or qudit (i.e., *d* = 2 for each qubit or d > 2 for each qudit).

Alternatively, the state |*ψ*₀〉 may be a predefined fixed initial state.

Next, the QIP component 120 is configured to generate, in a third step, a quantum state |*ψ*〉 *= U(**γ**,* 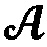 )|*ψ*₀〉 of a plurality of *N* qubits or qudits by executing the PQC, the PQC being parametrized with the set of parameters ***γ*** and incorporates the set of scenario variables ${\left\{{α}_{a}\right\}}_{a = 1}^{A}$.

The quantum state |*ψ*〉 comprises a linear superposition of quantum states, and said linear superposition of quantum states represents, or encodes, a superposition of the one or more robust solutions *xᵣ.* As explained above, *U*(***γ**,* 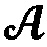 ) is a unitary quantum operator that is a function of the set of scenario variables ${\left\{{α}_{a}\right\}}_{a = 1}^{A}$ for all possible scenarios of the robust optimization problem, and is a function of the set of parameters **γ**.

Therefrom, in a fourth step, the QIP component 120 is configured to extract each of the one or more robust solutions *xᵣ* from the quantum state |*ψ*〉 by using a basis-state selection method, and send the one or more robust classical solutions *xᵣ* to the classical computation component 110.

The basis-state selection method may comprise, for example and not as a limitation, repeated measurements, classical shadows, state reconstruction protocols or full quantum state tomography.

Next, in a fifth step, the classical computation component 110 is configured to generate the set 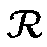 comprising the one or more robust classical solutions *xᵣ* received from the QIP component 120, i.e., $R = {\left\{{x}_{r}\right\}}_{r = 1}^{R}$, where *R* = | 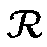 |.

Further, as a part of the fifth step, the classical computation component 110 is configured to provide the set 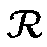 as a result 111 of the calculations.

For example and not as a limitation, the hybrid quantum-classical computer system 100 may provide the result 111 (that is, the set 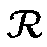 comprising all the robust solutions) to a decision making system.

In the exemplary embodiment according to Fig. 1, the unitary operator *U*(***γ**,* 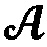 ) is composed at least by a plurality of parametrizable quantum gates with the set of parameters ***γ*,** and by one or more cost function Hamiltonians *Ĥ*(***α**ₐ*), each cost function Hamiltonian implementing a respective one of the scenario variables ${\left\{{α}_{a}\right\}}_{a = 1}^{A}$.

The plurality of parametrizable quantum gates can be realized in the QIPD 120, and ***γ*** are the parameters of these parametrizable quantum gates. Further, the plurality of parametrizable quantum gates comprise one or more single-qubit rotations and one or more two-qubit rotations. Alternatively, the plurality of parametrizable quantum gates comprise one or more single-qudit rotations and one or more two-qudit rotations.

For example, the single-qudit rotations and the two-qudits rotations may be, or may comprise, operators having the form *Rₖ*(*γ*) *=* exp(*-iγ Lₖ*) and *Rₖₗ*(*γ*) *= exp(-iy Lₖ* ⊗ *Lₗ*) respectively, where *k, l* ∈ {*x, y, z*} and *Lₖ* are spin operators. For qubits, the same expressions apply but replacing the spin operators *Lₖ* with the well-known Pauli operators *σₖ*.

Alternatively, the plurality parametrizable quantum gates may comprise any other parametrizable quantum gates implementable on the QIPD 120.

In this exemplary embodiment, the unitary operator *U*(***γ,*** 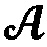 ) executed by the PQC may be expressed as in Equation (12): $\begin{matrix}U \left(γ, A\right) \\ = {U}_{M} \left({γ}_{1 ; A}\right) exp \left(-{iγ}_{2 ; A}\hat{H}\left({α}_{A}\right)\right) ⋯ {U}_{M} \left({γ}_{1 ; 2}\right) exp \left(-{iγ}_{2 ; 2}\hat{H}\left({α}_{2}\right)\right) {U}_{M} \left({γ}_{1 ; 1}\right) exp \left(-{iγ}_{2 ; 1}\hat{H}\left({α}_{1}\right)\right) ,\end{matrix}$ (12) where the set of parameter ***γ*** may be expressed as $γ = {\left\{{γ}_{1 ; a}, {γ}_{2 ; a}\right\}}_{a = 1}^{A}$ and comprises 2*A* free parameters, where *γ*_{1;*a*} and *γ*_{2;*a*} are each free parameters and parametrize a mixing unitary and the cost Hamiltonian, respectively, for each scenario *a*. Further, in Equation (12), each ***α**ₐ* is one scenario out of the *A* scenarios considered in the robust optimization problem, and *U_{M}*(*γ*_{1;*a*}) *=* exp(-*i* γ_{1;}*ₐĤ_{M}*) is the mixing unitary with the free parameter *γ*_{2;*a*} , and the mixing unitary is determined by a Hermitian mixing operator *Ĥ_{M}.*

The Hermitian mixing operator *Ĥ_{M}* is chosen to not commute with the cost Hamiltonians, [*Ĥ_{M} ,Ĥ*(***αₐ***)] ≠ 0. Further, the mixing operator *Ĥ_{M}* is a function of the x-angular momentum operator and the y-angular momentum operator as defined above, i.e., *Ĥ_{M}* ≡ *Ĥ_{M}*(*L̂ₓ, L̂_{y}*).

With the unitary operator *U*(***γ**,* 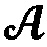 ) as defined above in Equation (12), the QIP component 120 may evolve the initial quantum state in a way that a weight of each basis state |*x*〉 that has a low value of the robustness criterion 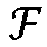 is increased in an efficient manner.

That is, the quantum state |*ψ*〉 that comprises the linear superposition of quantum states representing the superposition of the one or more robust solutions *xᵣ*, and that is obtained by the PQC, may be expressed as in Equation (13): $\left|\left.ψ\right〉\right. = {\sum }_{x} \sqrt{{p}_{U} \left(x\right)} \left|\left.x\right〉\right. ,$ (13) where *p_{U}*(***x***) is a probability distribution, which has a very large value for a respective solution ***x*** ⇔ |***x***〉 that minimizes the cost function for all the possible scenarios 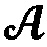 and that has a respective robustness criterion below a threshold value *F*₀. In other words, each robust solution has a very large probability, *p_{U}*(***x***) » 0, where the state x represents a robust solution, *xᵣ* ⇔ |***x***〉.

Accordingly, the probability distribution *p_{U}*(***x***) may be tailored so that those quantum states representing classical solutions that may not provide good results for all possible scenarios, i.e., that are not robust solutions, may have respective probability values being equal to, or being very close to, zero, *p_{U}*(***x***) ≈ 0.

Thereby, the PQC and the unitary operator *U*(***γ,*** 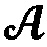 ) may be tailored so that the final quantum state |*ψ*〉 of Equation (13) may comprise a superposition only of states |*x*〉 that represent the robust solutions *xᵣ*.

For example, the probability distribution *p_{U}*(*x*) may be, or may comprise, a constant form as given Equation (14): ${p}_{U}^{constant} \left(x\right) = \frac{1}{R} Θ \left({F}_{0}-F\left[x, C, A\right]\right) with R = \left|R\right| and R = \left\{x:F\left[x, C, A\right]\leq {F}_{0}\right\} ,$ (14) or the probability distribution *p_{U}*(***x***) may be, or may comprise, a linear form as given Equation (15): ${p}_{U}^{linear} \left(x\right) = \frac{1}{Z} {\left[{F}_{0}-F\left[x, C, A\right]\right]}_{+} with Z = {\sum }_{x} {\left[{F}_{0}-F\left[x, C, A\right]\right]}_{+} ,$ (15) or the probability distribution *p_{U}*(***x***) may be, or may comprise, a Boltzmann distribution in the form given in Equation (16): ${p}_{U}^{Boltzmann} \left(x\right) = \frac{{e}^{- F \left[x, C, A\right] / {F}_{0}}}{Z} with Z = {\sum }_{x} {e}^{- F \left[x, C, A\right] / {F}_{0}} ,$ (16) where Θ(*j*) the Heavyside step function, the notation [*j*]₊ = max(*j*, 0) gives the argument j for positive arguments and zero otherwise, 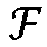 [***x**, C,* 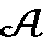 ] is the robustness criterion, and *F*₀ is the threshold value for the robustness criterion.

Other functional forms for the probability distribution *p_{U}*(***x***) may be used, depending on the implementation of the unitary operator *U(**γ**,* 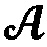 ) of the QIPD 120.

Thus, the solution according to this exemplary embodiment can solve the robust optimization problem in an efficient manner, since it can obtain the robust solutions *xᵣ* valid for all (many) different scenarios by running quantum operations in parallel, which include the information of all those scenarios. Moreover, all the robust solutions *xᵣ*, and thus the set 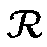 provided by the classical computation component 110, are efficiently encoded only in one quantum state. This is in contrast to classical approaches, which need to run several times and solve several problems with differing scenarios to obtain the set of solutions.

The quality of the output, i.e., the robustness of the solutions *xᵣ* and thus the set 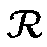 may be increased by using appropriate values for the parameters ***γ*** that parametrize the quantum gates. These values can be determined in many different ways, for example based on theoretical insights and simulation studies, or by using a classical optimization method that involves an iterative procedure.

Thus, in another exemplary embodiment, before the classical computation component 110 performs the fifth step of generating the set 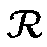 comprising the one or more robust classical solutions *xᵣ*, and providing the set 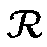 as the result 111, the classical computation component 110 may be configured to analyze, in a sixth step, the one or more robust solutions *xᵣ* using a classical optimization protocol or a heuristic method.

For example, the classical optimization protocol maybe used to analyze whether the one or more robust classical solutions *xᵣ*, achieve a minimal value for the robustness criterion 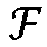 .

Then, the hybrid quantum-classical computer system 100 may be configured to perform an iterative procedure until a predefined criterion is reached. At each iteration i, the classical computation component 110 and the QIP component 120 may operate as follows.

The classical computation component 110 is configured to perform the second step explained above using an updated set of parameters ***γ*** based on a result of the analysis. That is, the classical computation component 110 is configured to generate an updated set of parameters ***γ*** based on the result of the analysis, and to provide the updated set of parameters ***γ*** to the QIPD 120.

Next, the QIP component 120 is configured to perform the third step explained above using the updated set of parameters ***γ***, thereby generating an updated quantum state |*ψ*〉 = *U*(*γ,* 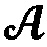 ) |*ψ*₀〉 that comprises an updated linear superposition of quantum states, the updated linear superposition of quantum states representing a superposition of one or more updated robust solutions *xᵣ*.

The QIP component 120 is further configured to perform the fourth step explained above on the updated quantum state |*ψ*〉. That is, the QIP component 120 is configured to extract each of the one or more updated robust classical solutions *xᵣ* from the updated quantum state |*ψ*〉 by using the basis-state selection method, and send the one or more updated robust solutions *xᵣ* to the classical computation component 110.

Therefrom, the classical computation component 110 is configured to repeat the sixth step explained above. That is, the classical computation component 110 analyzes the one or more updated robust classical solutions *xᵣ* using the classical optimization protocol or the heuristic method.

The iterations i are performed until satisfactory results for the one or more updated robust classical solutions *xᵣ* are obtained, reaching the predefined criterion.

For example, the predefined criterion may comprise a predefined minimal value for the robustness criterion 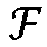 that is to be fulfilled by the updated one or more robust classical solutions *xᵣ.* Alternatively, the predefined criterion may comprise a predefined value for the robustness criterion threshold *F*₀ that is to be fulfilled by the updated one or more robust classical solutions *xᵣ.* Alternatively, the predefined criterion may comprise a predefined number of iterations. This does not limit the present disclosure.

Further alternatively, the classical optimization protocol or the heuristic method used by the classical computation component 110 may evaluate the probability distribution *p_{U}*(***x***) for the quantum state generated by the QIPD 120 and may then determine a desired distribution that may provide the one more updated robust classical solutions that fulfill a desired robustness criterion. Thus, the predefined criterion may further comprise a predefined probability distribution *p_{U}*(***x***)*.*

In another exemplary embodiment, in addition to the quantum degrees of freedom |***x***〉 encoding the problem variables, the QIPD 120 may comprise one or more ancilla quantum states, denoted as | 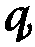 〉, that can be accordingly used in the unitary operator *U*(***γ**,* 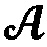 ) for computing the desired quantum state |*ψ*〉.

Thus, in this exemplary embodiment, the full quantum state |*ψ*〉 of the QIPD 120 has the basis states |***x***, 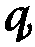 〉 that build up the full Hilbert space of the QIPD 120, as given in Equation (17): $H = {H}_{x} ⊗ {H}_{q} : \left\{\left|\left.ψ\right〉\right.={\sum }_{x , q} {ξ}_{x , q} \left|\left.x, q\right〉\right.\right\} ∈ {ℂ}^{{D}_{H}} ,$ (17) where *D_{H} = D_{P}D_{A}* is the dimensionality of the composed Hilbert space, which is determined by the dimensionality of the problem Hilbert space *D_{P} = d^{N}* and the ancilla Hilbert space *D_{A},* 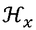 denotes the problem Hilbert space, 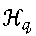 denotes the ancilla Hilbert space, and 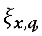 are arbitrary coefficients that are normalized, ∑*_{x,q}* |*ξ_{x,q}*|² = 1.

Accordingly, in this exemplary embodiment, the set of scenario variables comprising the one or more scenario variables ${\left\{{α}_{a}\right\}}_{a = 1}^{A}$ for the possible scenarios 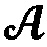 , may further be a function of the ancilla states.

Further, the set of parameters ***γ*** generated by the classical computation component 110, further comprise other set of parameters ***γ_{q}*** for the ancilla states.

Then, the unitary quantum operation implemented by the PQC can be generally expressed as *U(**γ**,* 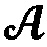 , 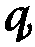 ), that is, the unitary operator executed by the PQC is further composed of a set of operators acting on the one or more ancilla states, and may be parametrizable via the set of parameters ***γ*** and may be further parametrizable via the other set of parameters ***γ_{q}**.*

Further, the QIP component 120 may generate the (predefined) initial state |*ψ*₀〉 that further comprises the ancilla states, i.e., |*ψ*₀〉 comprises a tensor product of the N-qubit or N-qudit initial states and one or more initial ancilla states.

Accordingly, the quantum state |*ψ*〉 generated by the PQC comprises a tensor product of the quantum states representing the one or more robust solutions *xᵣ* and the one or more ancilla states as a superposition, |*ψ*〉 = *U*(***γ**,* 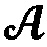 *,* 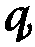 )|*ψ*₀) *=* 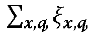 |*x,* 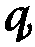 〉.

The coefficients *ξ_{x,q}* may be associated to a probability distribution that may further take into account the ancilla states, generally denoted as *p_{U}*(*x,* 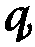 ), and that may ensure that the quantum state |*ψ*〉 generated by the PQC encodes only the one or more robust classical solutions, as explained above.

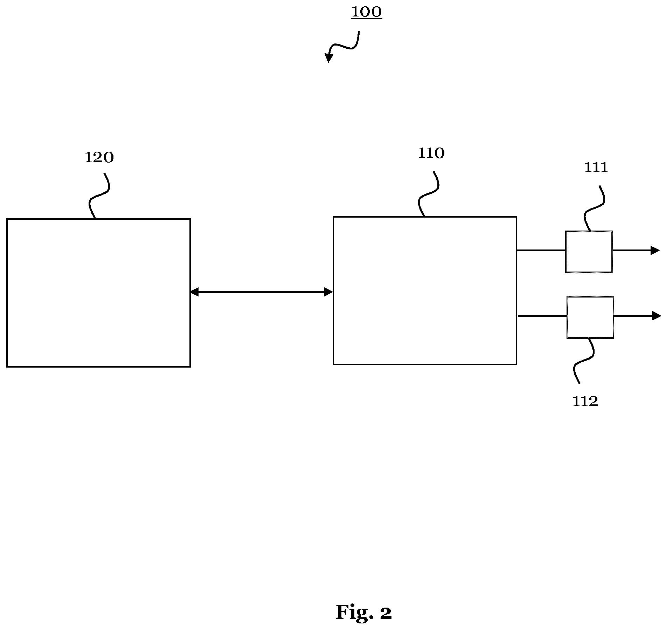

Fig. 2 shows another exemplary embodiment for a hybrid quantum-classical computer system 100 according to this disclosure that builds on the hybrid quantum-classical computer system 100 according to Fig. 1. Hereafter, only the differences between Fig. 2 and Fig. 1 are presented.

In the exemplary embodiment according to Fig. 2, the robust solutions ${\left\{{x}_{r}\right\}}_{r = 1}^{R}$ encoded in the state |*ψ*〉 can be further processed by grouping different solutions into one or more classes. Each of these classes may comprise a group of robust solutions *xᵣ* that show similar properties in some of their features.

For example, the classical computation component 110 may be further configured to process the set 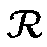 of robust solutions *xᵣ* to group the robust solutions *xᵣ* into the one or more classes by using classical post-processing, for example using a clustering method.

Then, the classical computation component 110 may be configured to provide the one or more classes as a further result 112.

Alternatively, the classification may be performed in the QIPD 120. That is, the QIP component 120 may be further configured to process the robust solutions *xᵣ* encoded in the quantum state |*ψ*〉 to group the robust solutions *xᵣ* into the one or more classes by using, e.g., a quantum machine learning algorithm.

For example and without limitation, the QIP component 120 may be configured to provide the quantum state |*ψ*〉 comprising all the robust solutions as superposition, see Equation (13), as an input to other quantum circuit. The other quantum circuit may be or may comprise, for example, a quantum neural network or a quantum kernel machine.

The other quantum circuit may be configured to process the quantum state |*ψ*〉 and to provide as an output other quantum state denoted as |*ψ_{Class}*〉, see Equation (18) below. The other quantum state |*ψ_{Class}*〉 may comprise one or more basis quantum states that encode the one or more robust solutions and a respective membership or association label *cᵣ*, with *cᵣ* ∈ {1, ..., *K*}, where the membership or association label *cᵣ* may assign each solution r to one of *K* classes: $\left|{ψ}_{Class}\right〉 = {\sum }_{r ∈ R} p \left({x}_{r}\right) \left|{x}_{r}, {c}_{r}\right〉 ,$ (18) where the basis states may be extended to include one qudit with K levels to indicate the class association label *cᵣ.*

The QIP component 120 may be further configured to extract from the quantum state |*ψ_{Class}*〉 the one or more robust solutions corresponding to a same class association label *cᵣ*, and may further generate the one or more classes mentioned above, i.e. may further group the robust solutions in each of the one or more classes. The extraction may be performed by the QIP component 120 by using a suitable basis-state selection method. Said basis state basis-state selection method may be or may comprise repeated measurements, classical shadows, state reconstruction protocols or full quantum state tomography.

Then, the QIP component 120 may be configured to provide the one or more classes to the classical computation component 110. Accordingly, the classical computation component 110 may provide the one or more classes as the further result 112.

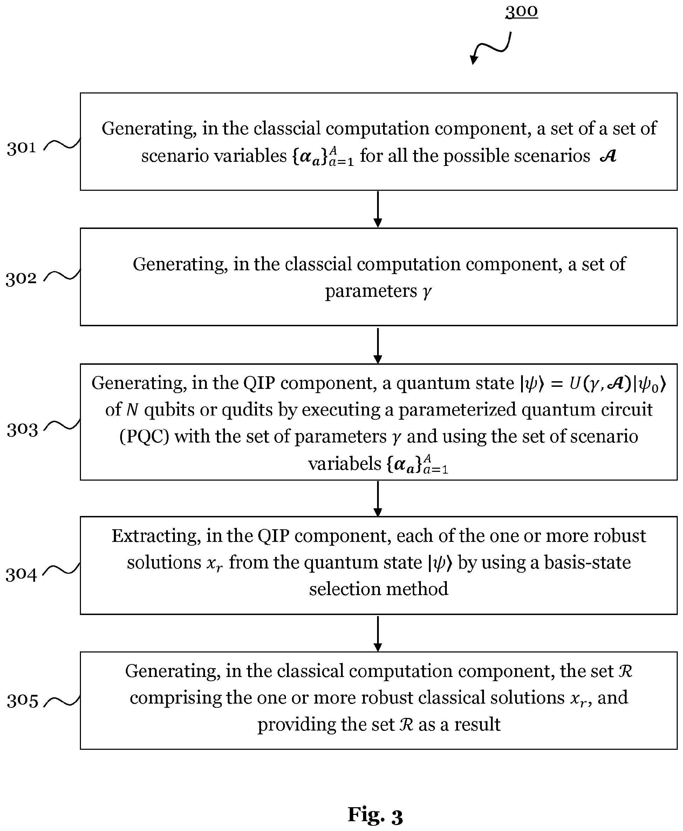

Fig. 3 shows a schematic view of a flowchart for an exemplary embodiment of a method 300 for a hybrid quantum-classical computer system 100 for obtaining a set 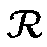 of one or more robust solutions *xᵣ* to a classical robust optimization problem, the one or more robust solutions providing optimal values of one or more cost functions *C(x, **α***), each cost function being a function of one or more variables *x* and of one or more scenario variables ***α*** ∈ 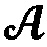 , 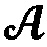 representing all possible scenarios, each scenario being characterized by a respective set of scenario variables ***α** =* (*α*₁, *α*₂,..*., αₖ*, *..., α_{N_{α}}*), wherein *N_{α}* is a number of parameters associated with the respective scenario, and *k =* 1, *..., N_{α},* wherein each robust solution *xᵣ* is specified by a set of parameters ***γ*** and by the scenario variables ***α***, the hybrid quantum-classical computer system 100 comprising a classical computation component 110 and a quantum information processing, QIP, component 120, according to the exemplary embodiments of this disclosure.

The method 300 may be performed by the hybrid quantum-classical computer system 100 of Fig. 1 of Fig. 2.

The method 300 comprises a step 301 of generating, in the classical computation component 110, a set of scenario variables, the set comprising the one or more scenario variables ${\left\{{α}_{a}\right\}}_{a = 1}^{A}$ for all the possible scenarios 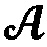 , wherein *A* is a total number of scenarios and *a* = 1, ..., *A*, and sending the set of scenario variables ${\left\{{α}_{a}\right\}}_{a = 1}^{A}$ to the QIP component 120.

Then, the method 300 comprises a step 302 of generating, in the classical computation component 100, the set of parameters ***γ*** and sending it to the QIP component 120,

Further, in a step 303, the method 300 comprises generating, in the QIP component 120, a quantum state |*ψ*〉 *= U*(***γ**,* 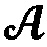 )|*ψ*₀〉 of a plurality of *N* qubits or *N* qudits by executing a PQC with the set of parameters ***γ***, where the quantum state |*ψ*〉 comprises a linear superposition of quantum states, the linear superposition of quantum states representing a superposition of the one or more robust solutions *xᵣ*, *U*(***γ,*** 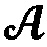 ) is a unitary quantum operator that is a function of the set of scenario variables ${\left\{{α}_{a}\right\}}_{a = 1}^{A}$ for all possible scenarios of the robust optimization problem and of the set of parameters ***γ***, and |*ψ*₀〉 is a N-qubit or N-qudit initial state.

The method 300 further comprise a step 304 of extracting, in the QIP component 120, each of the one or more robust solutions *xᵣ* from the quantum state |*ψ*〉 by using a basis-state selection method, and sending the one or more robust classical solutions *xᵣ* to the classical computation component 110.

Thereafter, in a step 305, the method comprises generating, in the classical computation component 110, the set 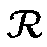 comprising the one or more robust classical solutions *xᵣ*, and providing the set 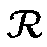 as a result 111.

In another exemplary embodiment, the method 300 further comprises processing, in the classical computation component 110, the set 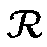 of robust solutions *xᵣ* to group the robust solutions *xᵣ* into one or more classes by using classical post-processing, and providing, by the classical computation component 110, the one or more classes as a further result 112.

Alternatively, in another exemplary embodiment, the method 300 further comprises processing, in the QIP component 120, the robust solutions *xᵣ* to group the robust solutions *xᵣ* into the one or more classes by using a quantum machine learning algorithm, and providing the one or more classes to the classical computation component 110, Then, the method comprises providing, by the classical computation component 110, the one or more classes as the further result 112.

In an exemplary embodiment of the method 300, the unitary quantum operator *U(**γ**,* 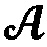 ) implemented by the PQC is composed at least by a plurality of parametrizable quantum gates with the set of parameters ***γ***, and by one or more cost function Hamiltonians *Ĥ*(***α**ₐ*), each cost function Hamiltonian implementing a respective one of the scenario variables ${\left\{{α}_{a}\right\}}_{a = 1}^{A}$, as explained above according to the embodiments of the hybrid quantum-classical computer system 100. The details are not repeated again here.

Further, in an exemplary embodiment of the method 300, the plurality of parametrizable quantum gates comprise one or more single-qubit rotations and one or more two-qubit rotations, or one or more single-qudit rotations and one or more two-qudit rotations.

In this exemplary embodiment of the method 300, the unitary operator *U*(***γ**,* 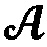 ) takes the form *U*(***γ**,* 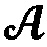 ) *=*
*U_{M}*(*γ*_{1;*A*}) exp(*-iγ*_{2;}*_{A}Ĥ*(*α_{A}*)) ··· *U_{M}*(*γ*_{1;2}) exp(*-iγ*_{2;2}*Ĥ*(*α*₂)) *U_{M}*(*γ*_{1;1}) exp (-*iγ*_{2;1}*Ĥ*(*α*₁))*,* where $γ = {\left\{{γ}_{1 ; a}, {γ}_{2 ; a}\right\}}_{a = 1}^{A}$ comprises 2*A* free parameters, each ***α**ₐ* of the set of scenario variables ${\left\{{α}_{a}\right\}}_{a = 1}^{A}$ is one scenario out of the *A* scenarios considered in the robust optimization problem, and *U_{M}* (*γ*) = exp(*-i **γ**Ĥ_{M}*) is a mixing unitary that is determined by a Hermitian mixing operator *Ĥ_{M},* the Hermitian mixing operator *Ĥ_{M}* being chosen to not commute with the cost Hamiltonians, [*Ĥ_{M} , Ĥ*(***αₐ***)] ≠ 0, and wherein the mixing operator *Ĥ_{M}* is a function of an x-angular momentum operator and a y-angular momentum operator, *Ĥ_{M}* ≡ *Ĥ_{M}*(*L̂ₓ, L̂_{y}*).

Further, in this exemplary embodiment of the method 300, the state |*ψ*〉 comprising the one or more robust solutions as superposition is expressed as $\left|ψ\right〉 = {\sum }_{x} \sqrt{{p}_{U} \left(x\right)} \left|x\right〉$ , where *p_{U}*(***x***) is a probability distribution, the probability distribution has a value ≫ 0 for a respective solution that minimizes the cost function for all the possible scenarios *A* and that has a respective robustness criterion below a threshold value *F*₀, as explained above. The details are not repeated again.

The probability distribution *p_{U}*(***x***) comprises, for example, the functional forms given in Equations (14)-(16) above. The details are not repeated again here.

Further, in another exemplary embodiment of the method 300, the PQC further comprises one or more ancilla states, each ancilla state corresponding to one ***α**ₐ* of the set of scenario variables ${\left\{{α}_{a}\right\}}_{a = 1}^{A}$.

Then, in this exemplary embodiment of the method 300, the unitary quantum operation implemented by the PQC is *U*(***γ**,* 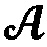 *,* 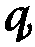 ) and is further composed of a set of operators acting on the one or more ancilla states, wherein 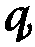 refers to the ancilla states. Additionally, the quantum state |*ψ*〉 comprises a tensor product of the quantum states representing the one or more robust solutions *xᵣ* and the one or more ancilla states, and wherein |*ψ*₀〉 is a tensor product of the *N-*qubit or N-qudit initial states and one or more initial ancilla states.

In another exemplary embodiment, before the step 305 of generating, in the classical computation component 110, the set 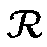 comprising the one or more robust classical solutions *xᵣ*, and providing the set 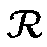 as the result 111, the method 300 further comprises: analyzing, in the classical computation component 110, the one or more robust solutions *xᵣ* using a classical optimization protocol or a heuristic method; and performing an iterative procedure until a predefined criterion is reached.

In each iteration i, the method 300 further comprises: performing the step 302 using an updated set of parameters ***γ*** based on a result of the analysis. Next, the method 300 comprises performing the steps 303 to 304 to obtain one or more updated robust solutions *xᵣ*. Therefrom, the method 300 comprises analyzing, in the classical computation component 110, the one or more updated robust solutions *xᵣ* using the classical optimization protocol or the heuristic method, and generating, in the classical computation component 110, a new updated the set of parameters ***γ*** based on the result of the analysis.

The method 300 further comprises actions according to the described aforementioned exemplary embodiments of the hybrid quantum-classical computer system 100 according to Fig. 1 and Fig. 2.

The details are not repeated again. Hence, the method 300 achieves the same advantages as the hybrid quantum-classical computer system 100.

The main advantages of the solutions according to this disclosure can be summarized as follows: The proposed method 300 and hybrid quantum-classical computer system 100 utilizing the PQC for solving a robust optimization problem provides a probability distribution over the set of all solutions allowed for the problem, where the probability of measuring a non-robust solution is close to, or exactly equal to, zero. The probability of a robust solution is positive and, if possible, the same across all robust solutions. This distribution is generated due to the use of the QIP component. The proposed quantum circuits (i.e. unitary operators) and the possibility to tune (i.e., optimize) their respective parameters, allows to obtain the whole set of robust solutions encoded in one quantum state.

From this quantum state, the complete set of many or even all robust solutions can be extracted by established methods (e.g. quantum state tomography or repeated measurements). This one of the most important advantages over classical methods, for which the calculation of different robust solutions is associated with significant effort, while a repetition of the execution of the unitary operation on the QIPD requires hardly any resources.

Furthermore, this selection can be further used or post-processed, for example, the found robust solutions can be divided into different classes, whereby a class contains many solutions that are similar in some properties and differ in others. In a routing problem, for example, robust routes can be divided into classes with respect to central transport hubs.

The present disclosure can also encompass the classification of all robust solutions into classes as a part of the quantum information processing. That is, after the operation of the PQC, which creates the quantum state in which all robust solutions are contained as superposition, other quantum circuit may follows which implements e.g. a quantum machine learning algorithm that generates a new quantum state in which each robust solution in the superposition is now assigned another attribute that indicates the class membership.

Another advantage is the possibility of post-optimization for small changes in the input parameters, for example by adding new scenarios or boundary conditions. Because a plurality of robust solutions is obtained, a recalculation using different parameters may thus not be necessary. In the case of a new scenario, for example a construction site at a traffic junction, only the solutions that use this junction are no longer robust, all others are still robust solutions. The classes of robust solutions generated in quantum circuits or in classical post-processing support this type of subsequent adaptation to new or greatly changed scenarios.

Further, the use of the QIPD 120 allows for the transfer of their potential benefits, which are inherent due to the use of physical properties such as superposition and entanglement. QIPDs promise a performance advantage or increased availability of computing capacities, especially when searching complex search spaces. The search space, i.e. the set of all permissible solutions, is particularly complex and time-consuming in a robust optimization problem, so that an increase in efficiency offers a considerable advantage in the application.

Further, the proposed method 300 and hybrid quantum-classical computer system 100 do not have an inconsiderable modularity. By simply replacing the robustness criterion and the corresponding function evaluated on the classical computation component, different robustness concepts can be taken into account without having to replace other parts of the PQC circuit, like, e.g. the unitary operators, and vice versa.

This disclosure will be now described for an implementation example. The example concerns to the service operation of a fleet of electric vehicles (EVs).

The problem statement is as follows: A service operator needs to plan the charging and driving schedule of a fleet consisting of *N_{EV}* EVs. The service operator gets *N_{P}* requests from customers for trips between arbitrary locations within the operating area.

The service operator also has installed one or more photovoltaic (PV) panels which produce renewable energy when the sun is shining. The energy is supplied to one or more charging stations and can be used to charge the EVs.

The task for the service operator is to devise a schedule for the charging of each EV, indexed by *n* ∈ {1, ..., *N_{EV}*}, for a given period of time divided into time intervals *t* ∈ {1, ..., *N_{T}*} by specifying the charging power level for each vehicle at each time interval: *x_{n,t}.*

Each charging level can be one of d + 1 values, *x_{n,t}* ∈ {*x*₀, *x*₀ + *Δx, x*₀ + 2Δ*x,* ..., *x*₀ + *d* · *Δx*}, where *Δx* is a constant specifying the power difference between two charging levels.

In this problem, bi-directional charging is considered, where the charging levels can also be negative, i.e. *x*₀ can be negative or positive. A negative charging level *x_{n,t}* implies the battery of the corresponding EV *n* is being discharged at that time interval *t.*

In addition to charging the fleet of EVs, the service operator needs to serve customer request for trips. Each trip *p* (with *p* ∈ {1, ..., *N_{P}*}) has a desired start time interval *tₚ,* an expected duration Δ*t*ₚ and an expected energy consumption Δ*Eₚ* of the EV serving this request.

In order to serve a customer request, the service operator needs to assign an EV to each request which is encoded in a binary variable *x_{n.p}* ∈ {0,1}, which characterizes if EV *n* serves the trip request *p*.

A possible solution to the problem is specified by the search vector ***x*** = {*x_{n,t}, x*_{*n*,p}} which specifies the charging level of each EV *n* at each time interval *t* and the assignment of each customer request *p* to an EV.

A specific problem instance is characterized by the values of several quantities, which determine the scenario variables of the robust optimization problem to be solved:
- PV system: In order to be able to propose a schedule for charging all cars and serving customer trips, the service operator has to make an assumption on how much PV power will be available during the scheduling period. This is reflected in the predicted PV output: *PV_{predict}*(*t*)*.* On the other hand, there is also the actual PV power available at each time, which is denoted as *PVₜᵣᵤₑ(t).* Since the prediction will never be 100% accurate and there are many different ways to make a prediction for the PV system, there is uncertainty and variations coming from the PV prediction.
- Each customer request has a desired pickup time *tₚ,* an expected duration Δ*tₚ* and an expected energy consumption Δ*Eₚ*. At the time of creating the schedule, these numbers must be assumed based on information available at that time. For example, the expected duration and energy cost could be estimated on the traffic situation, distance between origin and destination for the trip as well as driving characteristics of each EV (for example sporty, eco-mode, EV model, weight and size of the specific EV serving the request).
- Bi-directional charging of the fleet of EVs requires the assumption of electricity cost for getting and providing electricity to and from the electricity grid at time interval *t*. The service operator has to plan the schedule with predicted cost *c_{predict}*(*t*) for getting and *s_{predict}*(*t*) providing electricity. The true cost *cₜᵣᵤₑ*(*t*) for getting and *sₜᵣᵤₑ*(*t*) for providing will in general differ from the prediction used for planning.
- At the beginning of each scheduling period, each EV has an initial state of charge of its battery denoted by *E*_{*n,*0}.

Technically, these quantities are summarized in the scenario variables ***α*** in Equation (19): $α = \left({PV}_{predict}\left(t\right),{c}_{predict}\left(t\right),{s}_{predict}\left(t\right),{t}_{p},Δ{t}_{p},Δ{E}_{p},{E}_{n , 0}\right) ≡ \left({α}_{1},{α}_{2},…,{α}_{7}\right) .$ (19)

Therefore, in this implementation example, the number of variables specifying one scenario is given by *N_{α} =* 7.

One specification of these quantities defines one specific scenario. The set of all possible values for these quantities is given by a distribution of scenarios denoted by 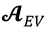 *,* for which optimal, robust solutions should be found.

For example, a set of possible scenarios 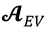 can be given by normal probability distributions, as shown in Equation (20): ${A}_{EV} = \left\{α∼\left(N\left({μ}_{{N}_{1} ,}{σ}_{{N}_{1}}\right),…,N\left({μ}_{{N}_{α}}, {σ}_{{N}_{α}}\right)\right)\right\} ,$ (20) where 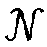 (*µₖ, σₖ*) is a normal distribution with mean *µₖ* and variance *σₖ*, which can generate a distribution of expected values for the scenario variables *αₖ* with *k =* 1, *..., N_{α}.*

Another example may be that for each scenario variable a set of possible values is given, ***α** =* (*α*₁, *..., αₖ*, ..., *α_{N_{α}}*) and each of those values *αₖ* can be one out of *dₖ* many different values, *αₖ* ∈ $\left\{{α}_{k}^{1},…,{α}_{k}^{{d}_{k}}\right\}$ with *k =* 1, ..., *N_{α}* and *dₖ* a number that may specify the possible values (i.e. the dimensionality) of a k-th component of each scenario variable ***α**.* The entirety of possible scenarios may be then a combination of all those different possible values, see Equation (21): ${A}_{EV} = \left\{α=\left({α}_{1},…,{α}_{k},…,{α}_{{N}_{α}}\right):{α}_{k}={α}_{k}^{1},…,{α}_{k}^{{d}_{k}} ∀ k=1,…,{N}_{α}\right\} ,$ (21) where each ${α}_{k} ∈ \left\{{α}_{k}^{1},…,{α}_{k}^{{d}_{k}}\right\}$ is one out of *dₖ* different discrete values.

For a given scenario ***α*** and a given solution *x*, a corresponding cost function can be calculated as in Equation (22): ${C}_{EV} \left(x, α\right) = {C}_{cost} \left(x, α\right) + {C}_{request} \left(x, α\right) ,$ (22) where the first contribution *C_{cost}* may measure the total cost of the electric energy drawn from or provided to the electricity grid, as may be given as in Equation (23): $\begin{matrix}{C}_{cost} \left(x, α\right) = {\sum }_{t = 1}^{{N}_{T}} {c}_{predict}^{α} \left(t\right) {\left[{\sum }_{n = 1}^{{N}_{EV}} {x}_{n , t} - {PV}_{predict}^{α} \left(t\right)\right]}_{+} \\ - {s}_{predict}^{α} \left(t\right) {\left[{PV}_{predict}^{α}\left(t\right)-{\sum }_{n = 1}^{{N}_{EV}} {x}_{n , t}\right]}_{+} .\end{matrix}$ (23)

In Equation (23), the first contribution represents a cost for receiving energy from an electricity grid with (predicted) cost ${c}_{predict}^{α} \left(t\right)$ per unit of energy at time *t,* and a second contribution that may account for a situation where energy is provided to the electricity grid, which has a different (predicted) cost ${s}_{predict}^{α} \left(t\right)$. While these costs could be viewed as actual monetary resources exchanged between the electricity grid operator and the EV fleet service operator, in this implementation example, they are merely used as a proxy for the effort to maintain the services and infrastructure for exchanging energy between the two entities, electricity grid and EV service operator.

The second term in Equation (23) may account for the customer mobility trip requests, and may be given in Equation (24): ${C}_{requests} \left(x, α\right) = {\sum }_{p}^{{N}_{p}} \left\{\begin{matrix}{\left({\sum }_{n = 1}^{{N}_{EV}} {x}_{n , p} - 1\right)}^{2} \\ + {\sum }_{n = 1}^{{N}_{EV}} {x}_{n , p} \left({\sum }_{t = {t}_{p}}^{{t}_{p}^{α} + Δ {t}_{p}^{α}} {\left({x}_{n , t}\right)}^{2} + {\left[Δ{E}_{p}^{α}-{E}_{n , 0}^{α}-{\sum }_{t = 1}^{{t}_{p}^{α}} {x}_{n , t}\right]}_{+}\right)\end{matrix}\right\} .$ (24)

The first contribution in Equation (24) may be minimum if all trip requests are served, the second term may ensure that an EV cannot be charged during the time it serves a trip request, and the third contribution may ensure that if an EV serves a trip, it has at least the necessary amount of energy stored in its battery.

In Equation (24), the notation [*v*]₊ = max(v, 0) introduced above has been used.

The robust optimization of the above-stated problem may then be solved with the method 300 implemented by the hybrid quantum-classical computer system 100 according to this disclosure.

In the quantum formulation, each solution vector x may be mapped to a problem basis state of the QIPD 120, see Equation (25): $x \to \left|x\right〉 = \left|\left\{{x}_{n , t}, {x}_{n , p}\right\}\right〉 .$ (25)

The cost function for each scenario may be represented by a cost Hamiltonian, which has the problem basis states as eigenstates and each eigenvalue is the corresponding cost, as given in Equation (26): ${\hat{H}}_{EV} \left(α\right) \left|\left\{{x}_{n , t}, {x}_{n , p}\right\}\right〉 = {C}_{EV} \left(\left\{{x}_{n , t}, {x}_{n , p}\right\}, α\right) \left|\left\{{x}_{n , t}, {x}_{n , p}\right\}\right〉 .$ (26)

Then, the classical computing device 110 may determine the set of scenario parameters, denoted as ${\left.{A}_{EV}={α}_{a}\right\}}_{a = 1}^{A}$, and may send (or load) them to the QIPD 120 where they are used to initialize the unitary operator *U*(***γ**,* 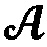 ) and optionally the ancilla quantum states | 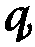 〉. Thereby, a probability distribution of scenarios 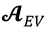 may be encoded in the QIPD 120.

For example, the operator *U(**γ**,* 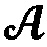 ) implemented in the QIPD 120, in particular in the PQC, may take the form given in Equation (27): $U \left(γ\right) = {\prod }_{l = 1}^{L} {\prod }_{a = 1}^{A} {e}^{- {iγ}_{1 ; l , a} {\hat{H}}_{M}} {e}^{- {iγ}_{2 ; l , a} {\hat{H}}_{EV} \left({α}_{a}\right)} ,$ (27) where a so-called mixing Hamiltonian *Ĥ_{M}* may be a Hermitian operator that may be only required to generally not commute with the cost Hamiltonians, i.e. [*Ĥ_{M}, Ĥ_{EV}*(*αₐ*)] ≠ 0 and that can, for example, be expressed as a sum over all x-angular momentum operators, ${\hat{H}}_{M} = {\sum }_{i}^{N} {\hat{L}}_{x}^{\left(i\right)}$.

The unitary operator in Equation (27) may comprise 2*AL* parameters, that is, the set of parameters ***γ*** may be expressed as $γ = {\left\{{\left\{{γ}_{1 ; l , a}, {γ}_{2 ; l , a}\right\}}_{a = 1}^{A}\right\}}_{l = 1}^{L}$, which was generated and provided by the classical computation component 110.

The product structure of the unitary operator in Equation (27) may indicate L layers of the operator enumerated by *l* = 1, ..., L, and a=1,..., *A* may enumerate the different scenarios that are all included in the QIPD 120 by multiplying the respective operators in each layer, as shown in Equion (27).

Alternatively, the unitary operator implemented in the QIPD 120 may use an ancilla quantum state | 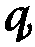 〉 in addition to the quantum states encoding the problem variables, |*x*〉, such that the complete quantum state lives inside the combined Hilbert space 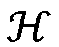 = 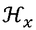 ⊗ 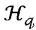 i.e. a general state can be written as |*ψ*〉 *=* 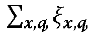 |*x,* 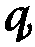 〉, where 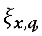 are arbitrary coefficients that are normalized, 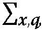 | 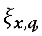 |² = 1.

For example, the QIP component 120 may further comprise an ancilla quantum state | 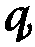 〉, which may be partitioned into *N_{α}* different subsystems, | 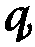 〉 = | 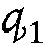 , 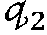 , ..., 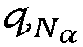 〉 where each subsystem may correspond to one scenario variable ***α*,** i.e., 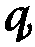 *=* ( 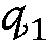 *,* 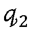 *,* ..., 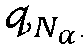 ) *⇔ **α =*** (*α*₁, ..., *αₖ*, ..., *α_{N_{α}}*).

Therefore, each basis state of the ancilla quantum state may correspond to one specific scenario, i.e. | 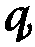 〉 *=* | 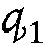 , ..., 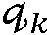 , ..., 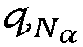 〉 ≡ | *α*₁, ... , *αₖ*, ..., *α_{N_{α}}*〉 *=* |*α*〉*.*

For example and without limitation, the unitary quantum operation *U*(***γ**,* 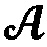 , 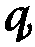 ) may take the form shown in Equation (28): $U \left(γ, A, q\right) = \left({\prod }_{l = 1}^{L} {e}^{- {iγ}_{1 , l} {\hat{H}}_{M} {e}^{- {iγ}_{2 ; l} {\hat{G}}_{EV}}}\right) {U}_{q} \left({γ}_{q}, A\right) ,$ (28) where 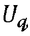 ( 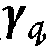 *,* 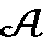 ) is a unitary operator that may act only on the ancilla quantum state **|*α*〉** and may be parametrized by free parameters comprised in the other set of parameters 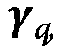 that may be generated and provided by the classical computation component 110.

The unitary operator 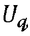 ( 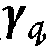 *,* 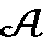 ) may be composed of arbitrary single- and two-qudit gates *Rₖ*( 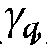 ) and *Rₖₗ*( 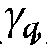 ) and then may create quantum superpositions in the ancilla quantum state. The parameters comprised in the other set 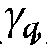 may be controlled by the classical computation component 110 and may be used to create a desired probability distribution of the scenario variables, 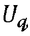 ( 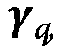 ***,*** 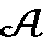 ) **|*α*〉** *= ξ***(** 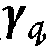 ***, α*)|*α*〉** with |*ξ***(** 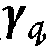 ***, α*)|²** *= P(* 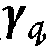 ***, α*),** where *P*( 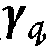 **, *α***) is a probability distribution over scenario variables.

In this example, the parameters in the other set of parameters 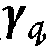 may be tuned, by the classical computation component 110, to reproduce a desired probability distribution of the scenario probabilities, *P***(** 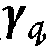 ***, α***) = *P*_{classical}**(*α*)** for each scenario. The tuning process may be performed in the classical computation component 110 by utilizing theoretical insights, or may be performed by the classical computation component 110 together with the QIP component 120 by the iterative procedure as explained above, which encompasses a classical optimization model, where the classical computation component 110 may generate the sets of parameters ***γ*** and 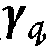 , and may further evaluate the probability distribution encoded by the updated quantum state |*ψ*〉 in order to obtain the desired probability distribution.

In Equation (28), *Ĝ_{EV}* is a Hermitian operator that may have the same functional form as the cost Hamiltonian *Ĥ_{EV}*(***α***) for the respective scenario ***α*** the difference that the scenario parameters are promoted to include z-angular momentum operators acting on the ancilla qudits, denoted as ${\hat{L}}_{z ; k}^{q}$. An example for the Herniation operator *Ĝ_{EV}* is given in Equation (29): ${\hat{G}}_{EV} = {\hat{H}}_{EV} \left(\left({α}_{k} {\hat{L}}_{z ; k}^{q}\right)\right) ,$ (29) where a short hand notation, shown in Equation (30), was introduced: $\begin{matrix}\left({α}_{k} {\hat{L}}_{z ; k}^{q}\right) \\ = \left({PV}_{predict}\left(t\right){\hat{L}}_{z ; 1}^{q},{c}_{predict}\left(t\right){\hat{L}}_{z ; 2}^{q},{s}_{predict}\left(t\right){\hat{L}}_{z ; 3}^{q},{t}_{p} {\hat{L}}_{z ; 4}^{q},Δ{t}_{p} {\hat{L}}_{z ; 5}^{q},Δ{E}_{p} {\hat{L}}_{z ; 6}^{q},{E}_{n , 0} {\hat{L}}_{z ; 7}^{q}\right) .\end{matrix}$ (30)

The operators ${\hat{L}}_{z ; 1}^{q ,}$ in Equation (30) may be diagonal in the ancilla basis states and act on the ancilla state in an usual way, see Equation (31): ${\hat{L}}_{z ; 3}^{q ,} \left|{α}_{1},…,{α}_{k},…,{α}_{{N}_{α}}\right〉 = {α}_{k} \left|{α}_{1},…,{α}_{k},…,{α}_{{N}_{α}}\right〉 ,$ (31)

In the exemplary EV charging problem, the quantum operations have free parameters comprised in the set ***γ*** and optionally in the other set 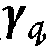 , which can be determined in different ways, for example, by any of the following methods:
a) Specifying the set ***γ*** and optionally in the another set 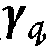 in the classical computation component 110 based on theoretical insights or as a the result of simulation studies and then providing them to the QIP component 120; or
b) Determining all the parameters in the set ***γ*** and optionally in the another set 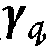 by an iterative optimization procedure, where the classical computation component 110 may determine the values for the parameters in ***γ*** and optionally in 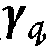 , send them to the QIPD 120, the QIPD 120 then may prepare the initial quantum state and may subsequently apply the quantum operations parametrized with the set in ***γ*** and optionally with the other set 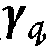 *.* The QIPD 120 may then measure the output quantum state |*ψ*〉 and may send the one or more robust classical solutions *xᵣ* to the classical computation component 110, which may then calculate the robustness criterion for the received robust solutions. Further, the classical computation component 110 may tune the parameters in ***γ***, and optionally the parameters in 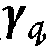 *,* to achieve a minimal value for the robustness criterion. In this example, the robustness criterion to be minimized can be realized as an average case robustness, defined in Equation (32): ${F}_{avg} \left[x, {C}_{EV}, {A}_{EV}\right] = {\sum }_{{α}_{EV} ∈ {A}_{EV}} {P}_{classical} \left(α\right) {C}_{EV} \left(x, α\right) ,$ (32) where *P*_{classical}(***α***) may be determined by probability distribution over scenario variables as, for example, *P*( 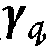 *, **α***) specified above.

In this implementation example, the QIPD 120 can encode a plurality of possible scenarios of the EV charging problem at once into the unitary quantum operators and the quantum states of the QIPD 120. Further, the QIP 120 can processes the information of all these scenarios at once when applying the unitary operations. This allows for a very effective and efficient evaluation of many different scenarios, and for the efficient finding of robust classical solutions to the technical problem at hand.

Further, by providing all the robust solutions, this implementation example increases the flexibility for the system operator and greatly increases the safety of operation. The system operator has the opportunity to choose a solution that meets additional, possibly soft, criteria. Further, the method 300 and the hybrid quantum-classical computer system 100 according to this implementation example can also be more responsive to unforeseen major changes, as not all robust solutions are likely to be affected by the change. If, for example, a route (e.g. road or passage of a canal) fails completely, all solutions that do not use this route are still robust solutions and can be implemented directly without adjustment. This is a great advantage over procedures where only individual solutions are found.

Additionally, the proposed method 300 and hybrid quantum-classical computer system 100 can also be applied to the operation of charging infrastructure for electro mobility, which benefits greatly from the possibility of providing a lot of robust charging planning from the fleet of EVs. The predicted energy demand and the amount of renewable energy available will differ from the values used for planning, making robust solutions necessary.

Another application example refers to aerodynamic design of parts, e.g. rotor blades of turbomachinery, outer shell of a vehicle, or shape of a piping system of an air conditioning and ventilation system (HVAC).

The flow behavior and the resulting performance strongly depends on the geometric properties of the parts and the boundary conditions of the flow, such as temperature, pressure, roughness of the surfaces, viscosity of the flowing fluids, velocities of rotating and moving parts, etc. Thus, the method 300 and the hybrid quantum-classical computer system 100 may provide all robust solutions, i.e. all geometries that show good flow behavior under many different boundary conditions is highly desirable.

This makes it possible to react flexibly to restrictions that do not have to be explicitly taken into account or that are only recognized after the design process, i.e., if the production of the parts either does not allow or requires some aspects of some geometries. For example, when designing a raw system, it may be that some raw pieces have to be split into two pieces due to manufacturing conditions. The resulting shocks, welds or glued seams influence the flow. Therefore, the method 300 and the hybrid quantum-classical computer system 100 in this implementation example may allow a user to choose those solutions that are robust to changes in this area.

A further implementation example refers to energy power plant planning. The aim is to draft a plan for an operator of energy-generating power plants to operate them as optimally as possible. The energy required should meet an electricity demand in the most cost-effective way, while ensuring the stability of distribution grids and integrating renewable energies in the best possible way. The plans for the operation of the power plants must be robust against deviations in real energy demand and real renewable energy production compared to the predicted quantities used for planning. In addition, the plans must be robust against fluctuations in the capacities of the grid and the power plants and electricity storage facilities.

The method 300 and the hybrid quantum-classical computer system 100 when applied to this example, provide with the knowledge of many or even all robust solutions, i.e. plans for the efficient operation of power plants in a variety of possible scenarios, allows a reliable and cost-effective energy supply.

## Claims

1. A computer implemented method (300) for a hybrid quantum-classical computer system (100) for obtaining a set 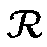 of one or more robust solutions *xᵣ* to a classical robust optimization problem, the one or more robust solutions providing optimal values of one or more cost functions *C(x, **α***), each cost function being a function of one or more variables *x* and of one or more scenario variables ***α*** ∈ 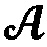 *,* 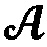 representing all possible scenarios, each scenario being **characterized by** a respective set of scenario variables ***α** =* (*α*₁, *α*₂, ... , *αₖ*, *..., α_{N_{α}}*), wherein *N_{α}* is a number of parameters associated with the respective scenario, and *k =* 1, *..., N_{α},* wherein each robust solution *xᵣ* is specified by a set of parameters ***γ*** and by the scenario variables ***α***, the hybrid quantum-classical computer system (100) comprising a classical computation component (110) and a quantum information processing, QIP, component (120), and the method comprising:
- generating (301), in the classical computation component (110), a set of scenario variables, the set comprising the one or more scenario variables ${\left\{{α}_{a}\right\}}_{a = 1}^{A}$ for the possible scenarios 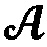 *,* wherein *A* is a total number of scenarios and *α* = 1, ... , *A,* and sending the set of scenario variables ${\left\{{α}_{a}\right\}}_{a = 1}^{A}$ to the QIP component;
- generating (302), in the classical computation component (110), the set of parameters ***γ*** and sending it to the QIP component;
- generating (303), in the QIP component (120), a quantum state |*ψ*〉 *= U(**γ**,* 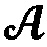 )|*ψ*₀〉 of a plurality of *N* qubits or *N* qudits by executing a parameterized quantum circuit, PQC, with the set of parameters ***γ***, wherein the quantum state |*ψ*〉 comprises a linear superposition of quantum states, the linear superposition of quantum states representing a superposition of the one or more robust solutions *xᵣ*, *U*(***γ**,* 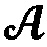 ) is a unitary quantum operator that is a function of the set of scenario variables ${\left\{{α}_{a}\right\}}_{a = 1}^{A}$ for all possible scenarios of the robust optimization problem and of the set of parameters ***γ***, and |*ψ*₀〉 is a N-qubit or N-qudit initial state;
- extracting (304), in the QIP component (120), each of the one or more robust solutions *xᵣ* from the quantum state |*ψ*〉 by using a basis-state selection method, and sending the one or more robust solutions *xᵣ* to the classical computation component (110);
and wherein the method further comprises:
generating (305), in the classical computation component (110), the set 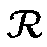 comprising the one or more robust solutions *xᵣ*, and providing the set 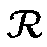 as a result (111).

2. The method (300) according to claim 1, wherein the method further comprises:
processing, in the classical computation component (110), the set 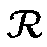 of robust solutions *xᵣ* to group the robust solutions *xᵣ* into one or more classes by using classical post-processing; and
providing, by the classical computation component (110), the one or more classes as a further result (112).

3. The method (300) according to claim 1, wherein the method further comprises:
processing, in the QIP component (120), the robust solutions *xᵣ* to group the robust solutions *xᵣ* into one or more classes by using a quantum machine learning algorithm, and providing the one or more classes to the classical computation component (110); and
providing, by the classical computation component (110), the one or more classes as a further result (112).

4. The method (300) according to one of the preceding claims, wherein the unitary quantum operator *U(**γ**,* 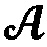 ) implemented by the PQC is composed at least by a plurality of parametrizable quantum gates with the set of parameters ***γ***, and by one or more cost function Hamiltonians *Ĥ*(***α**ₐ*), each cost function Hamiltonian implementing a respective one of the scenario variables ${\left\{{α}_{a}\right\}}_{a = 1}^{A}$.

5. The method (300) according to one of the preceding claims, wherein the plurality of parametrizable quantum gates comprise one or more single-qubit rotations and one or more two-qubit rotations, or one or more single-qudit rotations and one or more two-qudit rotations.

6. The method (300) according to one of the preceding claims, wherein the unitary operator *U(**γ**,* 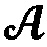 ) is: $U \left(γ, A\right) = {U}_{M} \left({γ}_{1 ; A}\right) exp \left(-{iγ}_{2 ; A}\hat{H}\left({α}_{A}\right)\right) ⋯ {U}_{M} \left({γ}_{1 ; 2}\right) exp \left(-{iγ}_{2 ; 2}\hat{H}\left({α}_{2}\right)\right) {U}_{M} \left({γ}_{1 ; 1}\right) exp \left(-{iγ}_{2 ; 1}\hat{H}\left({α}_{1}\right)\right)$ wherein $γ = {\left\{{γ}_{1 ; a}, {γ}_{2 ; a}\right\}}_{a = 1}^{A}$ comprises 2*A* free parameters, wherein *γ*_{1;*a*} is a parameter controlling a mixing unitary associated with each scenario *a*, *γ*_{2;*a*} is a parameter controlling the cost Hamiltonian characterizing each scenario *a*, each ***α**ₐ* of the set of scenario variables ${\left\{{α}_{a}\right\}}_{a = 1}^{A}$ is one scenario out of the *A* scenarios considered in the robust optimization problem, and *U_{M}*(γ_{1;*a*}) = exp(-*i γ*_{1;a}*Ĥ_{M}*) is the mixing unitary that is determined by a Hermitian mixing operator *Ĥ_{M},* the Hermitian mixing operator *Ĥ_{M}* being chosen to not commute with the cost Hamiltonians, [*Ĥ_{M} , Ĥ*(***α**ₐ*)] ≠ 0, and wherein the mixing operator *Ĥ_{M}* is a function of an x-angular momentum operator and a y-angular momentum operator, *Ĥ_{M}* ≡ *Ĥ_{M}*(*L̂ₓ, L̂_{y}*).

7. The method (300) according to one of the preceding claims, wherein the state |*ψ*〉 comprising the one or more robust solutions as superposition is expressed as: $\left|ψ\right〉 = {\sum }_{x} \sqrt{{p}_{U} \left(x\right)} \left|x\right〉 ,$ wherein *p_{U}*(***x***) is a probability distribution, the probability distribution having a value ≫ 0 for a respective solution that minimizes the cost function for all the possible scenarios 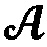 and that has a respective robustness criterion below a threshold value *F*₀.

8. The method (300) according to claim 6, wherein the probability distribution *p_{U}*(***x***) comprises: ${p}_{U}^{constant} \left(x\right) = \frac{1}{R} Θ \left({F}_{0}-F\left[x, C, A\right]\right) with R = \left|R\right| and R = \left\{x:F\left[x, C, A\right]\leq {F}_{0}\right\} ;$ or ${p}_{U}^{linear} \left(x\right) = \frac{1}{Z} {\left[{F}_{0}-F\left[x, C, A\right]\right]}_{+} with Z = {\sum }_{x} {\left[{F}_{0}-F\left[x, C, A\right]\right]}_{+} ;$ or ${p}_{U}^{Boltzmann} \left(x\right) = \frac{{e}^{- F \left[x, C, A\right] / {F}_{0}}}{Z} with Z = {\sum }_{x} {e}^{- F \left[x, C, A\right] / {F}_{0}} ;$ wherein Θ(*j*) the Heavyside step function, the notation [*j*]₊ = max(*j*,0) gives the argument j for positive arguments and zero otherwise, 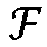 [***x**, C,* 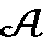 ] is the robustness criterion, and *F*₀ is the threshold value for the robustness criterion.

9. The method (300) according to one of the preceding claims, wherein the PQC further comprises one or more ancilla states, each ancilla state corresponding to one ***α**ₐ* of the set of scenario variables ${\left\{{α}_{a}\right\}}_{a = 1}^{A}$.

10. The method (300) according to claim 9, wherein the unitary quantum operation implemented by the PQC is *U*(***γ**,* 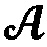 *,* 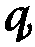 ) and is further composed of a set of operators acting on the one or more ancilla states, wherein 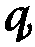 refers to the ancilla states; and
wherein the quantum state |*ψ*〉 comprises a tensor product of the quantum states representing the one or more robust solutions *xᵣ* and the one or more ancilla states, and wherein |*ψ*₀〉 is a tensor product of the N-qubit or N-qudit initial states and one or more initial ancilla states.

11. The method (300) according to one of the preceding claims, wherein before generating, in the classical computation component (110), the set 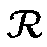 comprising the one or more robust solutions *xᵣ*, and providing the set 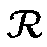 as the result (111), the method (300) further comprises:
analyzing, in the classical computation component (110), the one or more robust solutions *xᵣ* using a classical optimization protocol or a heuristic method;
performing an iterative procedure until a predefined criterion is reached, wherein in each iteration i the method comprises:
performing the method step (302) using an updated set of parameters ***γ*** based on a result of the analysis;
performing the method steps (303) to (304) to obtain one or more updated robust solutions *xᵣ*;
analyzing, in the classical computation component (110), the one or more updated robust solutions *xᵣ* using the classical optimization protocol or the heuristic method; and
generating, in the classical computation component (110), a new updated the set of parameters ***γ*** based on the result of the analysis.

12. The method (300) according to any of the preceding claims, wherein the method (300) is implemented to obtain, by a service operator, an optimal charging and driving schedule of a fleet consisting of *N_{EV}* electric vehicles, EVs, where the target is to find a set of solutions x = {*x_{n,t}, x_{n,p}*}, wherein *x_{n,t}* specifies a charging level of each EV at a time interval *t,* and *x_{n,p}* specifies an assignment of a trip request *p* from each of one or more customers to one of the EVs.

13. The method (300) according to claim 11, wherein one of the scenario variables is denoted ***α**_{EV},* and comprises: ${α}_{EV} = \left({PV}_{predict}\left(t\right),{c}_{predict}\left(t\right),{s}_{predict}\left(t\right),{t}_{p},Δ{t}_{p},Δ{E}_{p},{E}_{n , 0}\right) ≡ \left({α}_{1},{α}_{2},…,{α}_{7}\right) ,$
wherein a number of variables specifying one scenario is given by *N_{α}* = 7, and wherein:
*PV_{predict}*(*t*) is a predicted PV power available during the scheduling period;
each trip *p* requested by each customer has a desired start time interval *tₚ,* an expected duration Δ*t*ₚ and an expected energy consumption Δ*Eₚ* of a respective EV serving the request;
the service operator plans the schedule with predicted costs *c_{predict}*(*t*) and *s_{predict}*(*t*) for getting energy and for providing electricity respectively; and
*E*_{*n*,0} is an initial state of charge of the battery of each EV; and
wherein a set of all possible values for ***α**_{EV}* determine all the scenarios denoted by 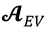 *,* for which robust solutions are to be found.

14. A hybrid quantum-classical computer system (100) comprising:
a quantum information processing, QIP, component (120) configured to realize a parametrized quantum circuit, PQC, by implementing a unitary quantum operation *U(**γ**,* 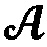 ) that is a function of a set of parameters ***γ*** and of a set of scenario variables of a classical robust optimization problem, to generate a N-qubit or qudit quantum state |*ψ*〉 by applying the unitary operator to a N-qubit or qudit initial state |*ψ*₀〉, |*ψ*〉 = *U(**γ**,* 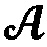 )|*ψ*₀〉, the quantum state |*ψ*〉 comprising a measurement basis of the QIP component (120), and each measurement basis state encodes one robust solution *xᵣ* of the classical robust optimization problem for all possible scenarios 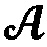 ; and
a classical computation component (110) configured to generate values of the set of parameters ***γ*** and to generate values of the set of scenario variables; provide the set of parameters ***γ*** and the set of scenario variables to the QIP component (120); initiate the execution of the PQC and the preparation of the state |*ψ*〉; receive one or more robust solutions *xᵣ* from the QIP component (120); generate a set 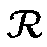 comprising the one or more robust solutions *xᵣ*; and provide the set 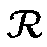 as a result (111);
wherein the QIP component (120) and the classical computation component (110) together solve the classical robust optimization problem as defined in the method (300) according to any one of the claims 1 to 13.
